# EUROPÄISCHE PATENTSCHRIFT

(11) **EP 3 480 055 B1**
(45) Veröffentlichungstag und Bekanntmachung des Hinweises auf die Patenterteilung: **27.05.2020**
(21) Anmeldenummer: 18201422.5
(22) Anmeldetag: 19.10.2018
(51) Int. Cl.: B60N 2/02, B60N 2/14, B60N 2/22, B60N 2/90

(54) **FAHRZEUGSITZ MIT VERLAGERBAREM RUECKENLEHNENOBERTEIL**
VEHICLE SEAT WITH MOVABLE TOP PART OF BACK-REST
SIÈGE DE VÉHICULE AVEC PARTIE SUPERIEURE DE DOSSIER DEPLACABLE

(30) Priorität: 27.10.2017 DE 102017125338
(43) Veröffentlichungstag der Anmeldung: 08.05.2019
(73) Patentinhaber: Grammer AG, 92224 Amberg (DE)
(72) Erfinder: Haller, Thomas, 92289 Ursensollen (DE)
(74) Vertreter: Hannke, Christian

(56) Entgegenhaltungen:
- DE-A1-102011 055 895
- DE-A1-102014 117 101

## Beschreibung

Die Erfindung betrifft einen Fahrzeugsitz mit einer Rückenlehne, bestehend aus einem Rückenlehnenunterteil und einem relativ zu dem Rückenlehnenunterteil verlagerbaren Rückenlehnenoberteil.

Derartige Fahrzeugsitze sind beispielsweise aus der DE 10 2011 055 895 bekannt, wobei das Rückenlehnenoberteil auf vielfältige Art und Weise gegenüber dem Rückenlehnenunterteil verlagerbar ist,

Jedoch weisen diese Fahrzeugsitze den Nachteil auf, dass bei Drehung eines Oberkörpers einer Person nach hinten auf dem Fahrzeugsitz zwar das Rückenlehnenoberteil derart verlagert wird, dass der Brustbereich bzw. der Schulterbereich auch bei gedrehtem Oberkörper gestützt wird, jedoch der Lendenbereich bzw. der Bereich unterhalb des Brustbereichs sich gegen das Rückenlehnenunterteil drückt und als unangenehm empfunden wird, da nicht die gesamte Bewegung der Drehung des Oberkörpers durch den Fahrzeugsitz nachempfunden werden kann.

Es ist daher Aufgabe der vorliegenden Erfindung, einen Fahrzeugsitz bereitzustellen, welcher die vorstehenden Nachteile ausräumt und der Bewegung des Körpers einer Person gut folgen kann.

Gelöst wird diese Aufgabe durch die Erfindung gemäß Anspruch 1.

Kerngedanke der Erfindung ist es dabei, einen Fahrzeugsitz mit einer Rückenlehne, bestehend aus einem Rückenlehnenunterteil und einem relativ zu dem Rückenlehnenunterteil verlagerbaren Rückenlehnenoberteil, bereitzustellen, wobei der Fahrzeugsitz mit einer Drehverstelleinrichtung zum Drehen des Fahrzeugsitzes verbunden ist, und wobei die Drehverstelleinrichtung eine Arretierungseinrichtung zum Arretieren der Drehverstelleinrichtung umfasst, wobei das Rückenlehnenoberteil und die Arretierungseinrichtung derart miteinander verbunden sind, dass bei einer Verlagerung des Rückenlehnenoberteils relativ zu dem Rückenlehnenunterteil von einer unverlagerten Position in eine verlagerte Position die Arretierung der Drehverstelleinrichtung lösbar ist.

Das bedeutet, dass bei einer Drehung des Oberkörpers einer Person, welche auf dem Fahrzeugsitz sitzt, der Fahrzeugsitz die Drehung des Oberkörpers nachbilden kann. Eine Drehung des Brust- bzw. Schulterbereichs resultiert auf dem Sitz auf einer Drehbewegung des Lendenbereichs, welcher der Fahrzeugsitz durch eine Drehverstelleinrichtung nachführen kann.

Hingegen ist es jedoch vorgesehen, dass, wenn keine Verlagerung des Rückenlehnenoberteils gegenüber dem Rückenlehnenunterteil vorgesehen ist, die Drehverstelleinrichtung arretiert ist, das heißt, dass keine Drehung des Fahrzeugsitzes möglich ist.

Bevorzugt weist der Fahrzeugsitz weiter ein Sitzteil auf, wobei das Rückenlehnenunterteil starr mit dem Sitzteil verbunden ist. Dadurch sind das Sitzteil und das Rückenlehnenunterteil in ihrer Bewegung, falls vorgesehen, gleich ausgebildet.

Weiter bevorzugt weist die Arretierungseinrichtung ein Arretierungselement auf, welches mit der Drehverstelleinrichtung in Kontakt bringbar ist, um die Drehverstelleinrichtung zu arretieren bzw. zu verriegeln, oder von der Drehverstelleinrichtung gelöst werden kann, um die Drehverstelleinrichtung zu entriegeln.

Gemäß einer ersten bevorzugten Ausführungsform ist ein erster Bowdenzug vorgesehen, wobei ein erstes Ende des Bowdenzugs mit dem Rückenlehnenoberteil und ein zweites Ende des Bowdenzugs mit der Arretierungseinrichtung derart verbunden ist, dass bei einer Verlagerung des Rückenlehnenteils aus der unverlagerten Position in die verlagerte Position das erste Ende des Bowdenzugs verlagerbar ist, wodurch ein Zug auf die Arretierungseinrichtung übertragbar ist und die Arretierung der Drehverstelleinrichtung lösbar ist.

Insbesondere ist das erste Ende des Bowdenzugs mit dem Rückenlehnenoberteil derart verbunden, dass durch die Verlagerung des Rückenlehnenoberteils von der unverlagerten Position in die verlagerte Position das erste Ende des Bowdenzugs mitverlagert wird, wodurch ein Zug auf den Bowdenzug über das erste Ende übertragen wird.

Bevorzugt ist es dabei denkbar, dass eine Haltevorrichtung vorgesehen ist, welche sowohl mit dem Bowdenzug, insbesondere im Bereich des ersten Endes des Bowdenzugs, als auch mit dem Rückenlehnenunterteil verbunden ist. Dies bedeutet, dass die Haltevorrichtung bei einer Verlagerung des Rückenlehnenoberteils gegenüber dem Rückenlehnenunterteil nicht verlagert wird.

Gemäß einer weiteren bevorzugten Ausführungsform ist der erste Bowdenzug ein Push-Pull-Bowdenzug. Das heißt, dass mittels des ersten Bowdenzugs sowohl Zugkräfte als auch Druckkräfte übertragen werden können. Insbesondere bedeutet dies, dass, wenn das Rückenlehnenoberteil in der verlagerten Position ist, durch Verlagerung des Rückenlehnenteils aus der verlagerten Position in die unverlagerte Position die Arretierung der Drehverstelleinrichtung herstellbar ist.

Gemäß einer alternativen Ausführungsform ist ein zweiter Bowdenzug vorgesehen, welcher mit der Drehverstelleinrichtung und mit dem Rückenlehnenoberteil verbunden ist und dazu vorgesehen und eingerichtet ist, durch Drehung des Fahrzeugsitzes mittels der Drehverstelleinrichtung von einer gedrehten Position in eine Normalposition des Fahrzeugsitzes das Rückenlehnenoberteil aus der verlagerten Position in die unverlagerte Position zu bringen.

Durch den zweiten Bowdenzug ist es also möglich, das verlagerte Rückenlehnenoberteil allein durch eine Drehung des Fahrzeugsitzes von der gedrehten Position in eine Normalposition bzw. unverdrehte Position in die unverlagerte Position zurückzubringen.

Zusammengefasst kann also mittels des ersten Bowdenzugs das Rückenlehnenoberteil aus der unverlagerten Position in die verlagerte Position gebracht werden, wobei die Arretierung der Drehverstelleinrichtung gelöst wird, und mittels des zweiten Bowdenzugs das Rückenlehnenoberteil aus der verlagerten Position in die unverlagerte Position gebracht werden, wenn der Fahrzeugsitz aus der gedrehten in die nichtgedrehte Position gebracht wird.

Handelt es sich jedoch bei dem ersten Bowdenzug um einen Bowdenzug, welcher lediglich Zugkräfte übertragen kann, ist es gemäß einer weiteren Ausführungsform vorteilhaft, dass eine Rückstellfeder mit dem zweiten Ende des Bowdenzugs verbunden ist, wobei mittels der Rückstellfeder bei Verlagerung des Rückenlehnenoberteils von der verlagerten Position in die unverlagerte Position die Arretierung herstellbar ist.

Da mittels des ersten Bowdenzugs ein Zug übertragen wird, handelt es sich bei der Rückstellfeder vorzugsweise um eine Druckfeder oder um eine Drehfeder. Durch derartige Federn wird die Feder bei Übertragen eines Zugs deformiert und es baut sich eine Rückstellkraft auf, welche gegen den Zug des Bowdenzugs gerichtet ist.

Gemäß einer bevorzugten alternativen Ausführungsform ist ein erster Sensor vorgesehen, welcher ausgebildet und vorgesehen ist, eine Verlagerung des Rückenlehnenoberteils gegenüber dem Rückenlehnenunterteil von einer unverlagerten Position in eine verlagerte Position zu detektieren, wobei nach Detektion dieser Verlagerung des Rückenlehnenoberteils die Arretierung der Drehverstelleinrichtung lösbar ist, sowie ausgebildet und vorgesehen ist, eine Verlagerung des Rückenlehnenoberteils von der verlagerten Position in die unverlagerte Position zu detektieren, wobei nach dieser Verlagerung die Arretierung der Drehverstelleinrichtung herstellbar ist.

Mittels des ersten Sensors ist es daher möglich, die Verlagerung des Rückenlehnenoberteils zu detektieren, und zwar in jede Richtung der Verlagerung, das heißt von der unverlagerten Position in die verlagerte Position und umgekehrt.

Weiter wird nach Beendigung der Verlagerung entweder die Arretierung der Drehverstelleinrichtung gelöst oder hergestellt, je nach Art bzw. Richtung der Verlagerung.

Dazu ist es gemäß einer bevorzugten Ausführungsform vorteilhaft, dass eine elektronische Steuereinheit vorgesehen ist, welche ausgebildet und vorgesehen ist, erste Signale des ersten Sensors zu empfangen und zu verarbeiten, wobei ausgehend und abhängig von den ersten Signalen des ersten Sensors durch die elektronische Steuereinheit ein Arretierungseinrichtungssteuersignal an eine Betätigungseinheit übermittelbar ist, wobei die Betätigungseinheit vorgesehen und ausgebildet ist, die Arretierungseinrichtung zu betätigen.

Das bedeutet insbesondere das Folgende: aufgrund der Detektion der Verlagerung des Rückenlehnenoberteils sendet der erste Sensor erste Signale aus, insbesondere an die elektronische Steuereinheit, wobei die ersten Signale Informationen darüber enthalten, dass eine Verlagerung des Rückenlehnenoberteils detektiert worden ist. Die elektronische Steuereinheit verarbeitet diese Signale in entsprechender Weise, insbesondere erkennt die Steuereinheit, um welche Art von Verlagerung es sich handelt, also entweder um eine Bewegung von der unverlagerten Position in die verlagerte Position oder von der verlagerten Position in die unverlagerte Position. Abhängig von dieser Entscheidung wird durch die Steuereinheit die Arretierungseinrichtung betätigt, und zwar wird entweder die Arretierung der Drehverstelleinrichtung gelöst oder hergestellt.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1A: eine Ausführungsform eines erfindungsgemäßen Fahrzeugsitzes in einer unverlagerten und nicht-gedrehten Position des Rückenlehnenoberteils;
- Fig. 1B: den Fahrzeugsitz gemäß Fig. 1A in einer verlagerten und gedrehten Position des Rückenlehnenoberteils;
- Fig. 2A: den Fahrzeugsitz gemäß Fig. 1A in einer genaueren Darstellung;
- Fig. 2AA: Details der Fig. 2A;
- Fig. 2B: den Fahrzeugsitz gemäß Fig. 1B in einer genaueren Darstellung;
- Fig. 2BB: Details der Fig. 2B;
- Fig. 3A: eine Ausführungsform einer Arretiereinrichtung in einem ersten Zustand;
- Fig. 3B: die Arretiereinrichtung gemäß Fig. 3A in einem zweiten Zustand;
- Fig. 4: eine weitere Ausführungsform eines erfindungsgemäßen Fahrzeugsitzes;
- Fig. 5A, 5B, 5C: eine weitere Ausführungsform einer Arretiereinrichtung;
- Fig. 6A, 6B: eine dritte Ausführungsform des erfindungsgemäßen Fahrzeugsitzes.

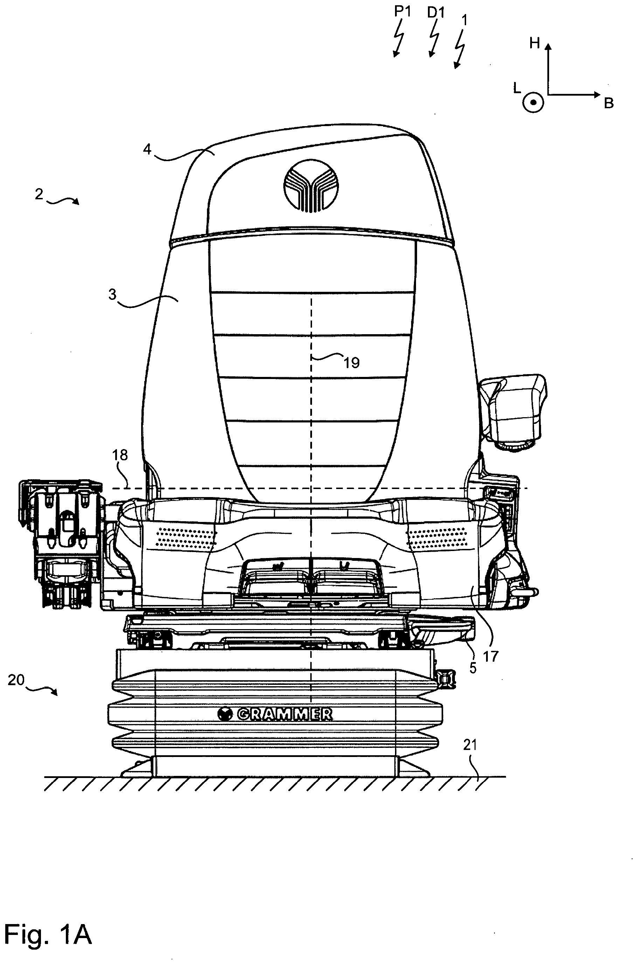

Die Figur 1A zeigt einen Fahrzeugsitz 1, welcher eine Rückenlehne 2 aufweist, wobei die Rückenlehne 2 ein Rückenlehnenunterteil 3 und ein Rückenlehnenoberteil 4 aufweist. Dabei ist das Rückenlehnenoberteil 4 gegenüber dem Rückenlehnenunterteil 3 verlagerbar angeordnet, insbesondere mittels einer Verlagerungseinrichtung (hier nicht gezeigt). Weiter ist das Rückenlehnenoberteil 4 in einer Höhenrichtung H gesehen oberhalb des Rückenlehnenunterteils 3 angeordnet. Darüber hinaus weist bevorzugt der Fahrzeugsitz 1 ein Sitzteil 17 auf, wobei das Sitzteil 17 und die Rückenlehne 3 besonders bevorzugt starr miteinander verbunden sind. Starr bedeutet hierbei jedoch, dass eine Verschwenkung der Rückenlehne 3 um eine erste Schwenkachse 18 möglich ist, wodurch die Neigung der Rückenlehne 3 gegenüber dem Sitzteil 17 einstellbar ist.

Weiter ist der Fahrzeugsitz 1 mit einer Drehverstelleinrichtung 5 verbunden, mittels welcher der Fahrzeugsitz 1 um eine vertikale Achse 19 drehbar gelagert ist.

Weiter ist es denkbar, dass ein Fahrzeugsitzunterbau 20 vorgesehen ist, welcher beispielsweise eine Federung und/oder eine Dämpfung zum Federn bzw. Dämpfen des Fahrzeugsitzes 1 umfassen kann.

Der Fahrzeugsitz 1 kann entweder mittels des Fahrzeugsitzunterbaus 20 oder, falls kein derartiger Fahrzeugsitzunterbau 20 vorgesehen ist, mittels der Drehverstelleinrichtung 5 auf einer Karosserie 21 oder einem Boden abgestellt und damit verbunden sein.

Gemäß Figur 1A handelt es sich um sowohl um eine unverlagerte Position P1 des Rückenlehnenoberteils 4 sowie um eine Normalposition D1 bzw. ungedrehte Position D1 der Drehverstelleinrichtung 5. Das heißt, dass auch der Fahrzeugsitz 1 insgesamt nicht gedreht ist. Dabei ist, solange das Rückenlehnenoberteil 4 nicht verlagert ist, das heißt in der unverlagerten Position P1 ist, die Drehverstelleinrichtung 5 arretiert, so dass keine Drehung des Fahrzeugsitzes 1 möglich ist.

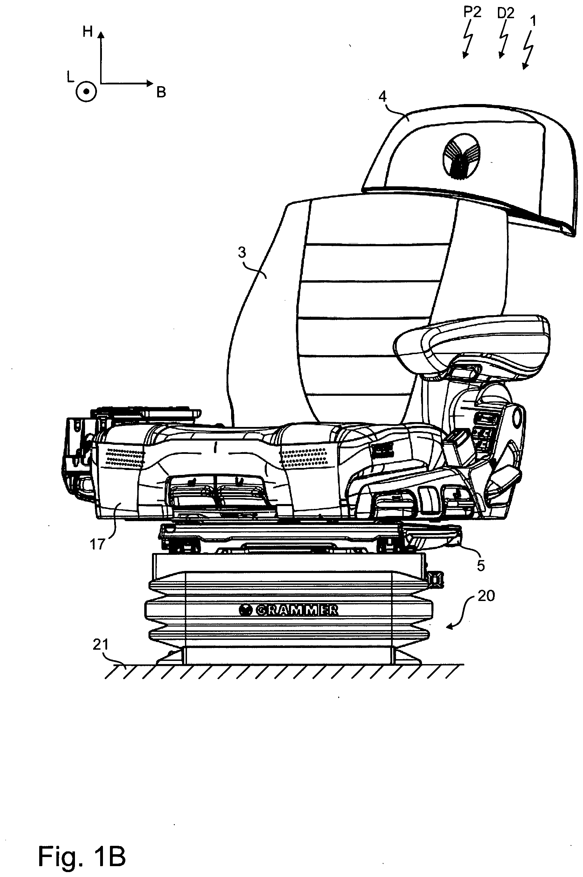

Die Figur 1B zeigt eine verlagerte Position P2 des Rückenlehnenoberteils 4 sowie eine gedrehte Position D2 der Drehverstelleinrichtung 5. Das heißt, dass der Fahrzeugsitz 1 um die vertikale Achse 19 gedreht ist.

Aufgrund der Verlagerung des Rückenlehnenoberteils 4 ist die Arretierung der Drehverstelleinrichtung 5 gelöst, das heißt, dass eine Drehung des Fahrzeugsitzes 1 möglich ist.

Durch die Bewegung einer Person, welche auf dem Fahrzeugsitz 1 Platz genommen hat, insbesondere einer Drehung des Brustbereiches bzw. des Schulterbereiches nach hinten, kann durch die Drehverstelleinrichtung 5 der Fahrzeugsitz 1 der Bewegung des Körpers der Person nachfolgen.

In den nachfolgenden Figuren wird die Verbindung des Rückenlehnenoberteils 4 und der Arretierungseinrichtung 6 sowie die Arretierungseinrichtung 6 in verschiedenen Ausführungsformen näher dargestellt.

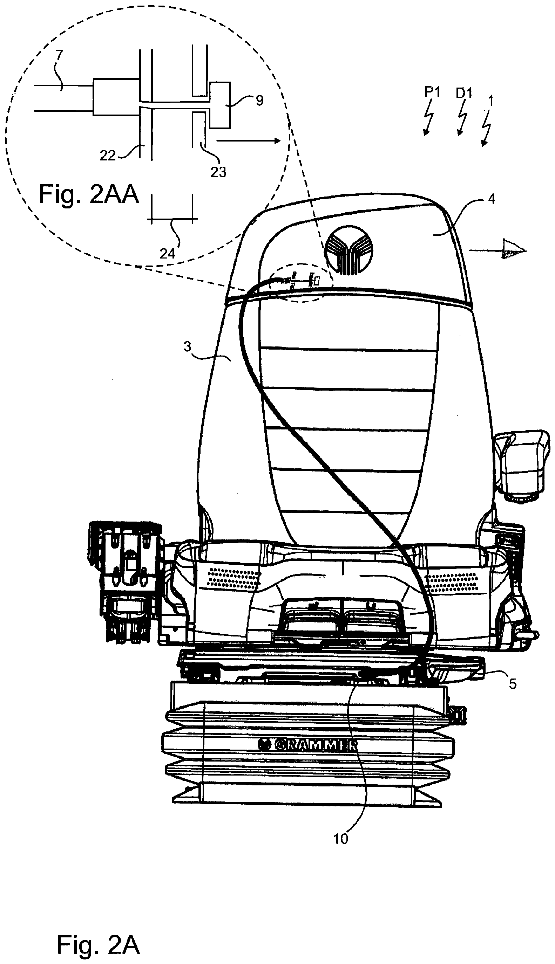

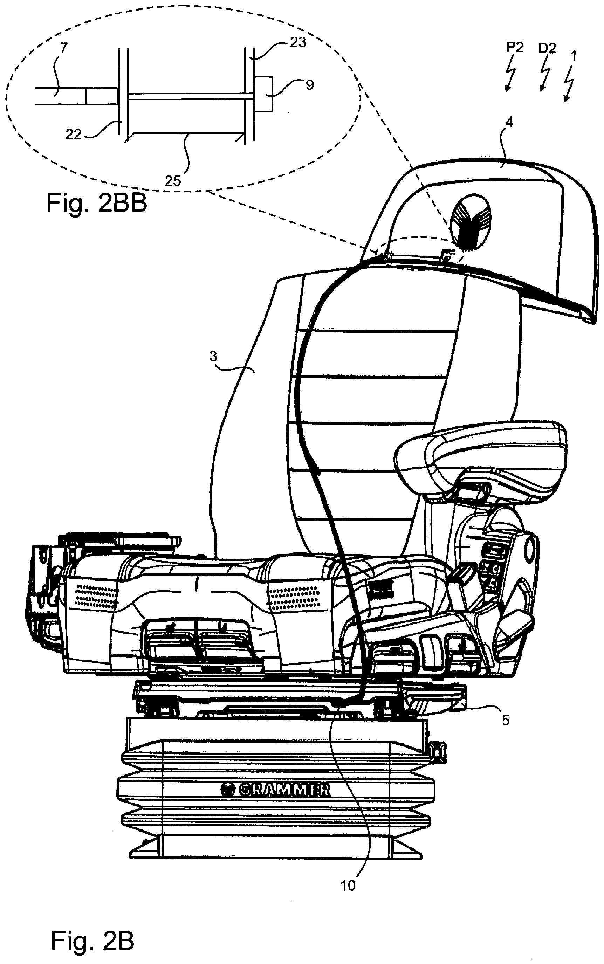

Die Figur 2A zeigt den Fahrzeugsitz 1 der Figur 1A und die Figur 2B zeigt den Fahrzeugsitz 1 der Figur 1B. Zusätzlich hierzu ist ein erster Bowdenzug 7 zu erkennen, mit einem ersten Ende 9 und einem zweiten Ende 10.

Sowohl in den Figuren 2A und 2B ist der erste Bowdenzug 7, insbesondere das erste Ende 9, mit dem Rückenlehnenoberteil 4 verbunden, so dass bei einer Verlagerung des Rückenlehnenoberteils 4, dargestellt durch den Pfeil, ein Zug auf den ersten Bowdenzug 7 ausgeübt wird.

Das zweite Ende 10 des ersten Bowdenzugs 7 ist dabei mit der Arretierungseinrichtung 6 der Drehverstelleinrichtung 5 verbunden, wobei in der unverlagerten Position P1 die Drehverstelleinrichtung 5 mittels der Arretierungseinrichtung 6 arretiert ist, das heißt, dass keine Drehung des Fahrzeugsitzes 1 möglich ist.

Die Figur 2AA zeigt einen Ausschnitt der Figur 2A in einer Vergrößerung. Wie zu erkennen ist, ist der erste Bowdenzug 7 einerseits mittels eines ersten Verbindungselements 22 mit dem Rückenlehnenunterteil 3 verbunden, wohingegen das erste Ende 9 des ersten Bowdenzugs 7 mittels eines zweiten Verbindungselements 23 mit dem Rückenlehnenoberteil 4 verbunden ist. Das erste Verbindungselement 22 ist dabei in einem ersten Abstand 24 zu dem zweiten Verbindungselement 23 angeordnet.

Die Figur 2B zeigt den Fahrzeugsitz 1 in der verlagerten Position P2 und der gedrehten Position D2. Durch Verlagerung des Rückenlehnenoberteils 4 gegenüber dem Rückenlehnenunterteil 3 wurde ein Zug auf den ersten Bowdenzug 7 ausgeübt und dabei die Arretierung der Drehverstelleinrichtung 5 durch die Arretierungseinrichtung 6 gelöst, so dass der Fahrzeugsitz 1 drehbar ist.

Dadurch, dass das erste Verbindungselement 22 mit dem Rückenlehnenunterteil 3 und das zweite Verbindungselement 23 mit dem Rückenlehnenoberteil 4 verbunden sind, wird auch das zweite Verbindungselement 23 entsprechend der Verlagerung des Rückenlehnenoberteils 4 mitverlagert. Das bedeutet insbesondere, dass sich der erste Abstand 24 ändert hin zu einem zweiten Abstand 25, welcher bei einer Verlagerung aus der unverlagerten Position P1 in die verlagerte Position P2 größer ist als der erste Abstand 24.

Das bedeutet insbesondere, dass das erste Ende 9 gegenüber einer Hülle des ersten Bowdenzugs 7 aus dieser Hülle herausgezogen wird und daher ein Zug auf das zweite Ende 10 des ersten Bowdenzugs 7 ausgeübt wird. Durch diesen Zug ist die Arretierungseinrichtung 6 betätigbar, wobei insbesondere die Arretierung der Drehverstelleinrichtung 5 gelöst wird.

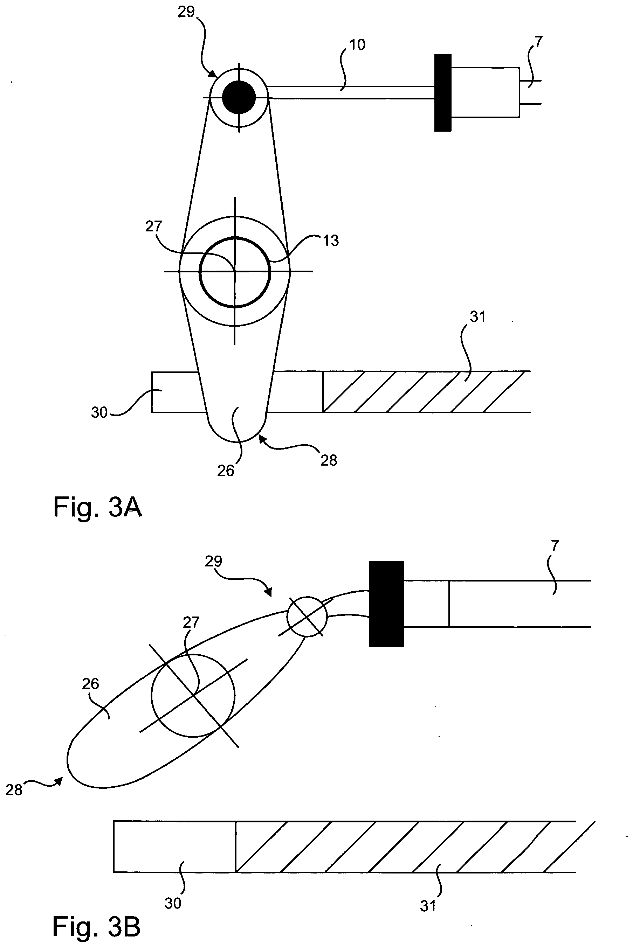

Die Figuren 3A und 3B zeigen dabei eine erste Ausführungsform einer Arretierungseinrichtung 6 zum Arretieren der Drehverstelleinrichtung 5.

Die Arretierungseinrichtung 6 umfasst dabei ein Hebelelement 26, welches um eine zweite Schwenkachse 27 verschwenkbar ist. Weiter weist das Hebelelement 26 ein erstes Ende 28 und ein zweites Ende 29 auf, wobei das erste Ende 28 mit einer Öffnung 30 der Drehverstelleinrichtung 5, insbesondere eines Drehadapters 31, in Kontakt bringbar ist und das zweite Ende 29 mit dem zweiten Ende 10 des ersten Bowdenzugs 7 verbunden ist. Durch Verlagerung des ersten Endes 9 des ersten Bowdenzugs 7 wird auch das zweite Ende 10 verlagert, wodurch das Hebelelement 26 um die zweite Schwenkachse 27 verschwenkt werden kann. Diese Situation ist in der Figur 3B dargestellt.

Weiter kann das Hebelelement 26 mit einer Rückstellfeder 13 verbunden sein, wobei die Rückstellfeder 13 als eine Drehfeder ausgebildet sein kann.

Steht das erste Ende 28 des Hebelelements 26 mit der Öffnung 30, wie in der Figur 3A gezeigt, in Kontakt, so ist die Drehverstelleinrichtung 5 arretiert. Ist das erste Ende 28 nicht in Kontakt mit der Öffnung 30, wie in der Figur 3B gezeigt, so ist die Drehverstelleinrichtung 5 nicht arretiert.

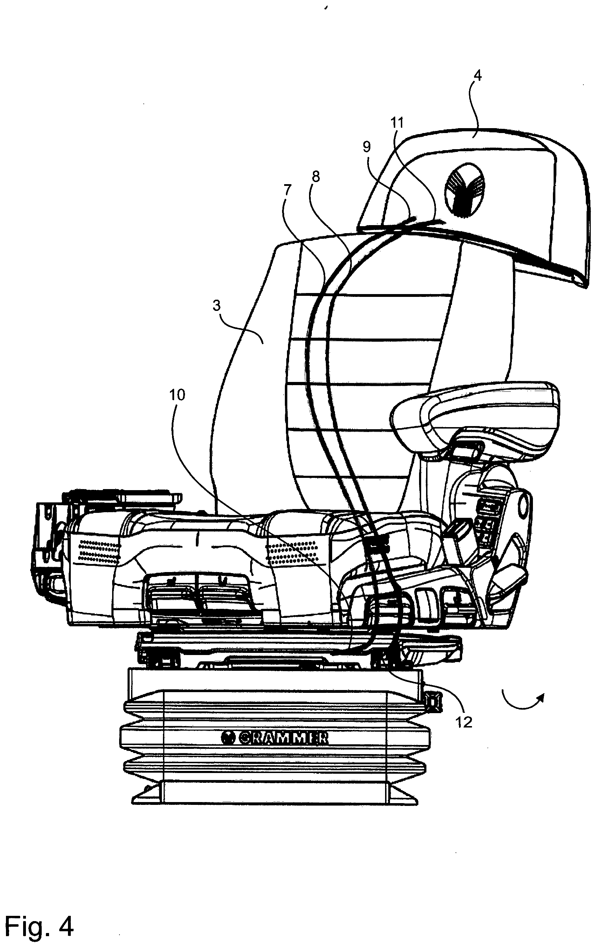

Die Figur 4 zeigt eine weitere Ausführungsform des Fahrzeugsitzes 1, wobei zusätzlich ein zweiter Bowdenzug 8 vorgesehen ist. Dieser zweite Bowdenzug 8 ist einerseits mit der Drehverstelleinrichtung 5 und andererseits mit dem Rückenlehnenoberteil 4 verbunden. Dabei ist der zweite Bowdenzug 8 dazu geeignet, dass durch Drehung des Fahrzeugsitzes 1 von der gedrehten Position D2 in die Normalposition D1 das Rückenlehnenoberteil 4 aus der verlagerten Position P2 in die unverlagerte Position P1 gebracht wird.

Dazu weist der zweite Bowdenzug 8 ebenso ein erstes Ende 11 und ein zweites Ende 12 auf, wobei das erste Ende 11 mit dem Rückenlehnenoberteil 4 und das zweite Ende 12 mit der Drehverstelleinrichtung 5 verbunden ist. Durch Drehung des Fahrzeugsitzes 1 aus der gedrehten Position D2 in die Normalposition D1 wird ein Zug über das zweite Ende 12 auf das erste Ende 11 übertragen und das Rückenlehnenoberteil 4 aus der verlagerten Position P2 in die unverlagerte Position P1 verlagert.

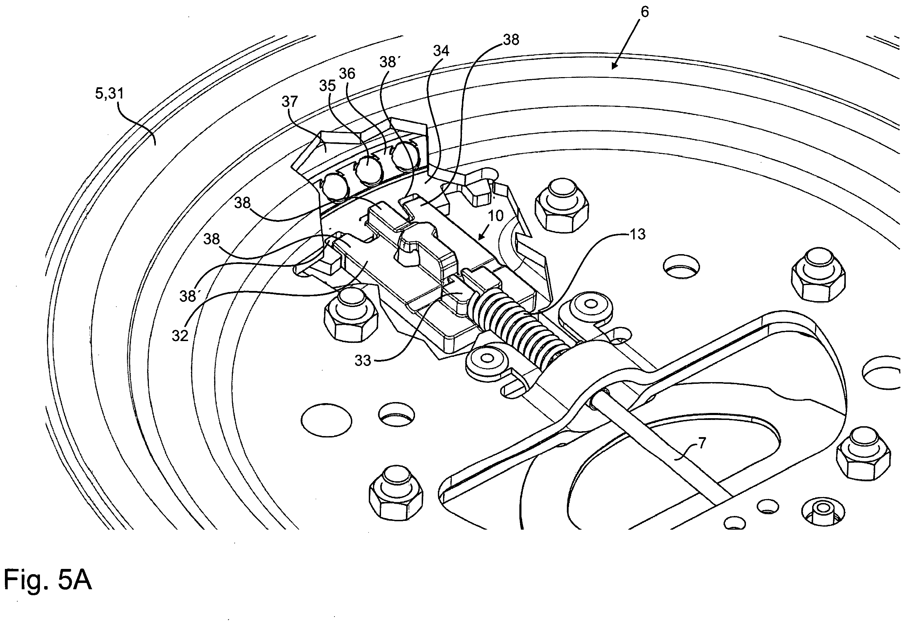

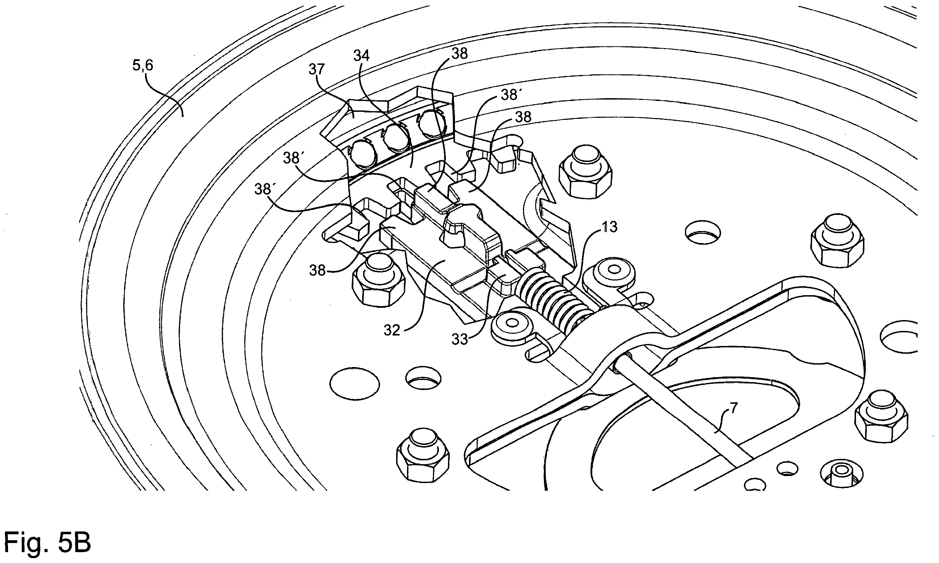

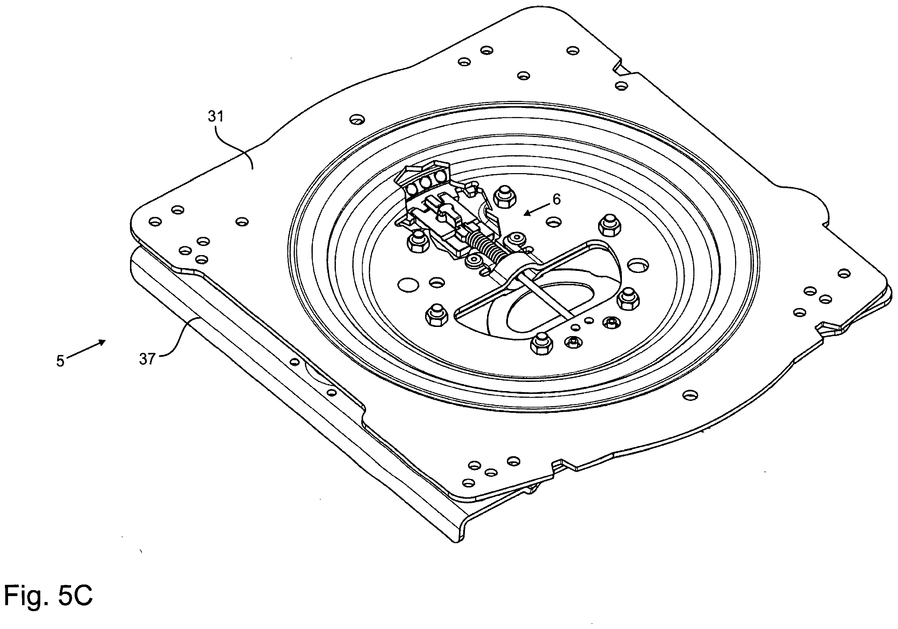

Die Figuren 5A, 5B und 5C zeigen eine weitere Ausführungsform der Arretierungseinrichtung 6, wobei die Arretierungseinrichtung 6 wie nachfolgend genauer beschrieben ausgebildet ist.

Zunächst weist der Drehadapter 31 bzw. die Drehverstelleinrichtung 5 einen Zahnkranz 34 auf, welcher vorliegend als ein Innenzahnkranz 34 ausgebildet ist. Der Drehadapter 31 ist gegenüber einer Drehadapterbasis 37 mittels eines Kugellagers 36 mit Kugelelementen 35 drehbar gelagert.

Die Arretierungseinrichtung 6 weist insbesondere ein Arretierungselement 32 auf, welches derart ausgebildet ist, dass das Arretierungselement 32 komplementär zu dem Zahnkranz 34 ausgebildet ist. Vorzugsweise weist das Arretierungselement 32 drei Zähne 38 auf, welche mit entsprechenden Zahnlücken 38' in Kontakt bringbar sind.

Greifen die Zähne 38 des Arretierungselements 32 in die Zahnlücken 38' des Zahnkranzes 34 ein, so ist die Drehverstelleinrichtung 5 arretiert, wie in der Figur 5A dargestellt; greifen die Zähne 38 nicht in die Zahnlücken 38' ein, so ist die Drehverstelleinrichtung 5 nicht arretiert, wie in der Figur 5B dargestellt.

Weiter ist der erste Bowdenzug 7 mit seinem ersten Ende 9 mittels einer Bowdenzugbefestigung 33 mit dem Arretierungselement 32 verbunden, und weiter ist ebenso eine Rückstellfeder 13, vorliegend als Druckfeder ausgebildet, vorgesehen, welche mit dem Arretierungselement 32 und dem Drehadapter 31 in Wirkkontakt steht.

Durch Ausüben eines Zugs durch Verlagerung des Rückenlehnenoberteils 4 von der unverlagerten Position P1 in die verlagerte Position P2 wird das zweite Ende 10 des ersten Bowdenzugs 7 entsprechend verlagert, so dass als Konsequenz das damit verbundene Arretierungselement 32 ebenso verlagert wird und die Rückstellfeder 13 gestaucht wird.

Wird dann das Rückenlehnenoberteil 4 von der verlagerten Position P2 in die unverlagerte Position P1 zurück verlagert, so wird kein Zug mehr ausgeübt, wodurch sich durch die Rückstellfeder 13 das Arretierungselement 32 automatisch in einen arretierten Zustand bringt und die Drehverstelleinrichtung 5 arretiert.

Die Figur 5A zeigt die Arretierungseinrichtung 6 in einem arretierten Zustand, die Figur 5B die Arretierungseinrichtung 6 in einem nicht arretierten Zustand und die Figur 5C eine perspektivische Ansicht der gesamten Drehverstelleinrichtung 5 mit Arretierungseinrichtung 6.

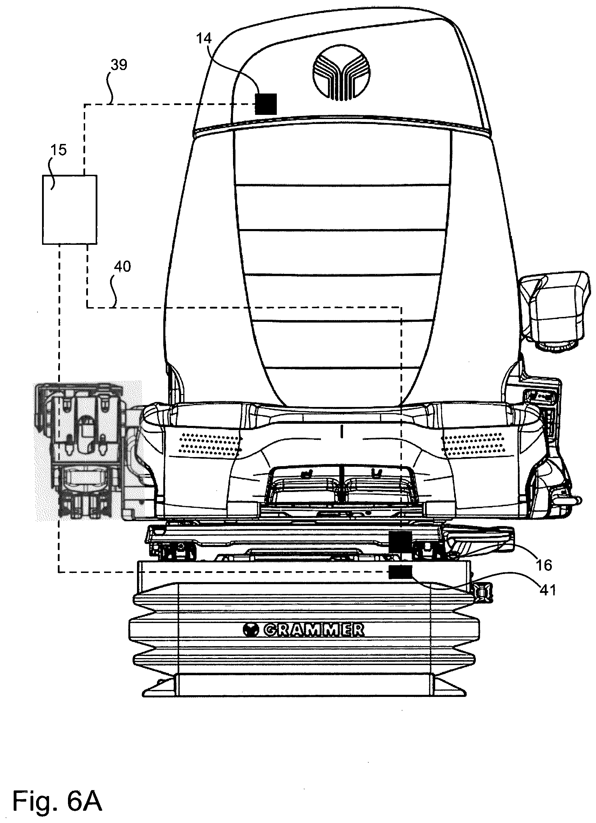

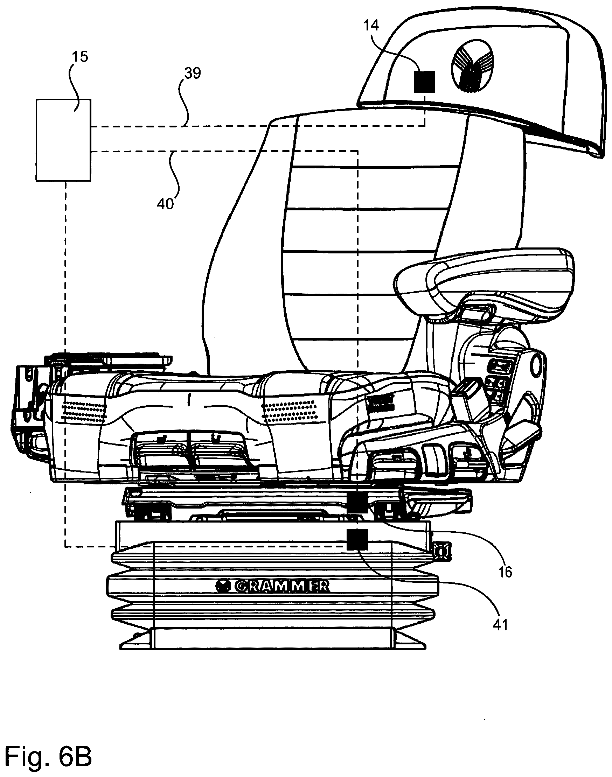

In den Figuren 6A und 6B ist eine alternative Ausführungsform gezeigt, welche keine Bowdenzüge umfasst, sondern die Arretierungseinrichtung 6 elektronisch gesteuert wird.

Insbesondere ist ein erster Sensor 14 vorgesehen, welcher ausgebildet und vorgesehen ist, eine Verlagerung des Rückenlehnenoberteils 4 gegenüber dem Rückenlehnenunterteil 3 von einer unverlagerten Position P1 in eine verlagerte Position P2 zu detektieren, wobei nach Detektion dieser Verlagerung des Rückenlehnenoberteils 4 die Arretierung der Drehverstelleinrichtung 5 mittels der Arretierungseinrichtung 6 lösbar ist, sowie eine Verlagerung des Rückenlehnenoberteils 4 von der verlagerten Position P2 in die unverlagerte Position P1 zu detektieren, wobei nach dieser Verlagerung die Arretierung der Drehverstelleinrichtung 5 mittels der Arretierungseinrichtung 6 herstellbar ist.

Weiter vorzugsweise ist eine elektronische Steuereinheit 15 vorgesehen, welche ausgebildet und vorgesehen ist, erste Signale 39 des ersten Sensors 14 zu empfangen und zu verarbeiten, wobei ausgehend von den Signalen des ersten Sensors 14 durch die elektronische Steuereinheit 15 ein Arretierungseinrichtungssteuersignal 40 an eine Betätigungseinheit 16 übermittelbar ist, wobei die Betätigungseinheit 16 vorgesehen und ausgebildet ist, die Arretierungseinrichtung 6 zu betätigen.

Die Betätigung der Arretierungseinrichtung 6 durch die Betätigungseinheit 16 hängt von der Art der Verlagerung ab. Wird das Rückenlehnenoberteil 4 von der unverlagerten Position P1 in die verlagerte Position P2 verlagert, so wird das Arretierungseinrichtungssteuersignal 40 versendet mit der Information, dass die Arretierung zu lösen ist. Wird das Rückenlehnenoberteil 4 von der verlagerten Position P2 in die unverlagerte Position P1 verlagert, so wird das Arretierungseinrichtungssteuersignal 40 versendet mit der Information, dass die Arretierung herzustellen ist.

Besonders bevorzugt wird eine Arretierung nur dann hergestellt, wenn sich die Drehverstelleinrichtung 5 in der Normalposition D1 befindet. Dazu kann ein zweiter Sensor 41 vorgesehen sein, wobei der zweite Sensor 41 mit der Steuereinheit 15 signaltechnisch verbunden ist.

### Bezugszeichenliste

- 1: Fahrzeugsitz
- 2: Rückenlehne
- 3: Rückenlehnenunterteil
- 4: Rückenlehnenoberteil
- 5: Drehverstelleinrichtung
- 6: Arretierungseinrichtung
- 7: erster Bowdenzug
- 8: zweiter Bowdenzug
- 9: erstes Ende des ersten Bowdenzugs
- 10: zweites Ende des ersten Bowdenzugs
- 11: erstes Ende des zweiten Bowdenzugs
- 12: zweites Ende des zweiten Bowdenzugs
- 13: Rückstellfeder
- 14: erster Sensor
- 15: Steuereinheit
- 16: Betätigungseinheit
- 17: Sitzteil
- 18: erste Schwenkachse
- 19: vertikale Achse
- 20: Fahrzeugsitzunterbau
- 21: Karosserie
- 22: erstes Verbindungselement
- 23: zweites Verbindungselement
- 24: erster Abstand
- 25: zweiter Abstand
- 26: Hebelelement
- 27: zweite Schwenkachse
- 28: erstes Ende des Hebelelements
- 29: zweites Ende des Hebelelements
- 30: Öffnung
- 31: Drehadapter
- 32: Arretierungselement
- 33: Bowdenzugbefestigung
- 34: Zahnkranz
- 35: Kugelelement
- 36: Kugellager
- 37: Drehadapterbasis
- 38: Zahn
- 38': Zahnlücke
- 39: erstes Signal
- 40: Arretierungseinrichtungssteuersignal
- 41: zweiter Sensor
- P1: unverlagerte Position
- P2: verlagerte Position
- D1: Normalposition
- D2: gedrehte Position
- L: Längsrichtung
- H: Höhenrichtung
- B: Breitenrichtung

## Patentansprüche

1. Fahrzeugsitz (1) mit einer Rückenlehne (2), bestehend aus einem Rückenlehnenunterteil (3) und einem relativ zu dem Rückenlehnenunterteil (3) verlagerbaren Rückenlehnenoberteil (4),
**dadurch gekennzeichnet, dass**
der Fahrzeugsitz (1) mit einer Drehverstelleinrichtung (5) zum Drehen des Fahrzeugsitzes (1) verbunden ist, wobei die Drehverstelleinrichtung (5) eine Arretierungseinrichtung (6) zum Arretieren der Drehverstelleinrichtung (5) umfasst, und wobei das Rückenlehnenoberteil (4) und die Arretierungseinrichtung (6) derart miteinander verbunden sind, dass bei einer Verlagerung des Rückenlehnenoberteils (4) relativ zu dem Rückenlehnenunterteil (3) von einer unverlagerten Position (P1) in eine verlagerte Position (P2) eine Arretierung der Drehverstelleinrichtung (5) lösbar ist.

2. Fahrzeugsitz (1) nach Anspruch 1,
**dadurch gekennzeichnet, dass**
ein erster Bowdenzug (7) vorgesehen ist, wobei ein erstes Ende (9) des ersten Bowdenzugs (7) mit dem Rückenlehnenoberteil (4) und ein zweites Ende (10) des ersten Bowdenzugs (7) mit der Arretierungseinrichtung (6) derart verbunden sind, dass bei einer Verlagerung des Rückenlehnenoberteils (4) aus der unverlagerten Position (P1) in die verlagerte Position (P2) das erste Ende (9) des ersten Bowdenzugs (7) verlagerbar ist, wodurch ein Zug auf die Arretierungseinrichtung (6) übertragbar ist und die Arretierung der Drehverstelleinrichtung (5) lösbar ist.

3. Fahrzeugsitz (1) nach Anspruch 1 oder 2,
**dadurch gekennzeichnet, dass**
ein zweiter Bowdenzug (8) vorgesehen ist, welcher mit der Drehverstelleinrichtung (5) und dem Rückenlehnenoberteil (4) verbunden und dazu vorgesehen und eingerichtet ist, durch Drehung des Fahrzeugsitzes (1) mittels der Drehverstelleinrichtung (5) von einer gedrehten Position (D2) in eine Normalposition (D1) des Fahrzeugsitzes (1) das Rückenlehnenoberteil (4) aus der verlagerten Position (P2) in die unverlagerte Position (P1) zu bringen.

4. Fahrzeugsitz (1) nach Anspruch 2,
**dadurch gekennzeichnet, dass**
der erste Bowdenzug (7) ein Push-Pull-Bowdenzug ist.

5. Fahrzeugsitz (1) nach Anspruch 2 oder 3,
**dadurch gekennzeichnet, dass**
eine Rückstellfeder (13) mit dem zweiten Ende (10) des ersten Bowdenzugs (7) verbunden ist, wobei mittels der Rückstellfeder (13) bei Verlagerung des Rückenlehnenoberteils (4) von der verlagerten Position (P2) in die unverlagerte Position (P1) die Arretierung der Drehverstelleinrichtung (5) herstellbar ist.

6. Fahrzeugsitz (1) nach Anspruch 1,
**dadurch gekennzeichnet, dass**
ein erster Sensor (14) vorgesehen ist, welcher ausgebildet und vorgesehen ist, eine Verlagerung des Rückenlehnenoberteils (4) gegenüber dem Rückenlehnenunterteil (3) von der unverlagerten Position (P2) in die verlagerte Position (P2) zu detektieren, wobei nach Detektion dieser Verlagerung des Rückenlehnenoberteils (4) die Arretierung der Drehverstelleinrichtung (5) lösbar ist, sowie eine Verlagerung des Rückenlehnenoberteils (4) von der verlagerten Position (P2) in die unverlagerte Position (P1) zu detektieren, wobei nach dieser Verlagerung die Arretierung der Drehverstelleinrichtung (5) herstellbar ist.

7. Fahrzeugsitz (1) nach Anspruch 6,
**dadurch gekennzeichnet, dass**
eine elektronische Steuereinheit (15) vorgesehen ist, welche ausgebildet und vorgesehen ist, erste Signale (39) des ersten Sensors (14) zu empfangen und zu verarbeiten, wobei ausgehend von den ersten Signalen (39) des ersten Sensors (14) durch die elektronische Steuereinheit (15) ein Arretierungseinrichtungssteuersignal (40) an eine Betätigungseinheit (16) übermittelbar ist, wobei die Betätigungseinheit (16) vorgesehen und ausgebildet ist, die Arretierungseinrichtung (6) zu betätigen.

## Claims

1. Vehicle seat (1) having a backrest (2) comprising a backrest lower part (3) and a backrest upper part (4) that can be displaced relative to the backrest lower part (3), **characterised in that**
the vehicle seat (1) is connected to a rotary adjusting device (5) for rotating the vehicle seat (1), wherein the rotary adjusting device (5) comprises a locking device (6) for locking the rotary adjusting device (5), and wherein the backrest upper part (4) and the locking device (6) are interconnected such that upon a displacement of the backrest upper part (4) relative to the backrest lower part (3) from a non-displaced position (P1) into a displaced position (P2), a locking of the rotary adjusting device (5) is releasable.

2. Vehicle seat (1) according to claim 1,
**characterised in that**
a first Bowden cable (7) is provided, wherein a first end (9) of the Bowden cable (7) is connected to the backrest upper part (4) and a second end (10) of the Bowden cable (7) is connected to the locking device (6) such that upon a displacement of the backrest upper part (4) from the non-displaced position (P1) to the displaced position (P2), the first end (9) of the Bowden cable (7) is displaceable, whereby a traction is transferable to the locking device (6) and the locking of the rotary adjusting device (5) is releasable.

3. Vehicle seat (1) according to claim 1 or 2,
**characterised in that**
a second Bowden cable (8) is provided, which is connected to the rotary adjusting device (5) and to the backrest upper part (4) and is provided and adapted to transfer, by rotation of the vehicle seat (1) by means of the rotary adjusting device (5) from a rotated position (D2) to a normal position (D1) of the vehicle seat (1), the backrest upper part (4) from the displaced position (P2) to the non-displaced position (P1).

4. Vehicle seat (1) according to claim 2,
**characterised in that**
the first Bowden cable (7) is a push-pull Bowden cable.

5. Vehicle seat (1) according to claim 2 or 3,
**characterised in that**
a return spring (13) is connected to the second end (10) of the first Bowden cable (7), wherein by means of the return spring (13) upon displacement of the backrest upper part (4) from the displaced position (P2) into the non-displaced position (P1), the locking of the rotary adjusting device (5) can be obtained.

6. Vehicle seat (1) according to claim 1,
**characterised in that**
a first sensor (14) is provided, which is designed and provided to detect a displacement of the backrest upper part (4) relative to the backrest lower part (3) from the non-displaced position (P1) into the displaced position (P2), wherein after detection of this displacement of the backrest upper part (4), the locking of the rotary adjusting device (5) is releasable, and to detect a displacement of the backrest upper part (4) from the displaced position (P2) into the non-displaced position (P1), wherein after this displacement, the locking of the rotary adjusting device (5) may be obtained.

7. Vehicle seat (1) according to claim 6,
**characterised in that**
an electronic control unit (15) is provided, which is designed and provided to receive and process first signals (39) of the first sensor (14), wherein starting from the first signals (39) of the first sensor (14), a locking device control signal (40) is transmittable to an actuator unit (16) by the electronic control unit (15), wherein the actuator unit (16) is provided and designed to operate the locking device (6).

## Revendications

1. Siège de véhicule (1) comportant un dossier (2) constitué d'une partie inférieure de dossier (3) et d'une partie supérieure de dossier (4) déplaçable par rapport à la partie inférieure de dossier (3),
**caractérisé par le fait que**
le siège de véhicule (1) est relié à un dispositif de réglage en rotation (5) pour la rotation du siège de véhicule (1), le dispositif de réglage de rotation (5) comportant un dispositif de blocage (6) pour le verrouillage du dispositif de réglage en rotation (5), et la partie supérieure de dossier (4) et le dispositif de blocage (6) étant reliés l'un à l'autre de telle sorte que, lors d'un déplacement de la partie supérieure de dossier (4) par rapport à la partie inférieure de dossier (3) d'une position non déplacée (P1) dans une position déplacée (P2), un blocage du dispositif de réglage en rotation (5) est libérable.

2. Siège de véhicule (1) selon la revendication 1,
**caractérisé par le fait qu'**
un premier câble Bowden (7) est prévu, une première extrémité (9) du premier câble Bowden (7) étant reliée à la partie supérieure de dossier (4) et une seconde extrémité (10) du premier câble Bowden (7) étant reliée au dispositif de blocage (6) de telle sorte que, lors d'un déplacement de la partie supérieure de dossier (4) à partir de la position non déplacée (P1) dans la position déplacée (P2), la première extrémité (9) du premier câble Bowden (7) est déplaçable, ce par quoi une traction est transférable au dispositif de blocage (6) et le blocage du dispositif de réglage en rotation (5) est libérable.

3. Siège de véhicule (1) selon l'une des revendications 1 ou 2,
**caractérisé par le fait qu'**
un second câble Bowden (8) est prévu, lequel est relié au dispositif de réglage en rotation (5) et à la partie supérieure de dossier (4) et est prévu et configuré pour, par rotation du siège de véhicule (1) au moyen du dispositif de réglage en rotation (5) d'une position tournée (D2) dans une position normale (D1) du siège de véhicule (1), amener la partie supérieure de dossier (4) de la position déplacée (P2) dans la position non déplacée (P1).

4. Siège de véhicule (1) selon la revendication 2,
**caractérisé par le fait que**
le premier câble Bowden (7) est un câble Bowden push-pull.

5. Siège de véhicule (1) selon l'une des revendications 2 ou 3,
**caractérisé par le fait qu'**
un ressort de rappel (13) est relié à la seconde extrémité (10) du premier câble Bowden (7), le blocage du dispositif de réglage en rotation (5) pouvant être obtenu au moyen du ressort de rappel (13) lors d'un déplacement de la partie supérieure de dossier (4) de la position déplacée (P2) dans la position non déplacée (P1).

6. Siège de véhicule (1) selon la revendication 1,
**caractérisé par le fait qu'**
un premier détecteur (14) est prévu, lequel est conçu et prévu pour détecter un déplacement de la partie supérieure de dossier (4) par rapport à la partie inférieure de dossier (3) de la position non déplacée (P2) dans la position déplacée (P2), le blocage du dispositif de réglage en rotation (5) étant libérable après détection de ce déplacement de la partie supérieure de dossier (4), ainsi que pour détecter un déplacement de la partie supérieure de dossier (4) de la position déplacée (P2) dans la position non déplacée (P1), le blocage du dispositif de réglage en rotation (5) pouvant être obtenu après ce déplacement.

7. Siège de véhicule (1) selon la revendication 6,
**caractérisé par le fait qu'**
une unité de commande électronique (15) est prévue, laquelle est conçue et prévue pour recevoir et pour traiter des premiers signaux (39) du premier détecteur (14), un signal de commande de dispositif de blocage (40) étant transmissible à une unité d'actionnement (16) à partir des premiers signaux du premier détecteur (14) par l'unité de commande électronique (15), l'unité d'actionnement (16) étant prévue et conçue pour actionner le dispositif de blocage (6).
